# EUROPÄISCHE PATENTANMELDUNG

(11) **EP 1 003 143 A1**
(43) Veröffentlichungstag der Anmeldung: **24.05.2000**
(21) Anmeldenummer: 99440314.5
(22) Anmeldetag: 16.11.1999
(51) Int. Cl.: G09B 7/04, G09B 5/14

(54) **Verfahren zur automatischen Auswahl und Zusammenstellung eines Lernkurses durch einen Rechner**

(30) Priorität: 17.11.1998 DE 19852938
(71) Anmelder: ALCATEL, 75008 Paris (FR)
(72) Erfinder: Hägebarth, Frank, 74366 Kirchheim (DE)
(74) Vertreter: Brose, Gerhard, Dipl.-Ing.

(57) **Zusammenfassung**

Um ein solches Verfahren (1) derart auszugestalten, daß die Effizienz des Lernkurses erhöht wird, schlägt die Erfindung ein Verfahren (1) mit den nachfolgenden Schritten vor:
- Auswahl von Fragen aus einer Gruppe von Fragen (2),
- Erstellung eines Eingangstests durch Zusammenfügen der ausgewählten Fragen (5),
- Bereitstellung des Eingangstests an den Lernenden (3,6),
- Aufnahme der Antworten des Lernenden (3) auf die Fragen des Eingangstests (7),
- Bestimmung der Fähigkeiten des Lernenden (3) durch eine Auswertung der Antworten,
- Bestimmung einer Struktur von Verknüpfungen zu Lernobjekten in Abhängigkeit von den Fähigkeiten des Lernenden (3,8,9,10), und
- Bereitstellung des Lernkurses für den Lernenden (3,11).

## Beschreibung

Die vorliegende Erfindung betrifft ein Verfahren zur automatischen Auswahl und Zusammenstellung eines Lernkurses aus Lernobjekten für einen Lernenden durch einen Rechner.

Die Erfindung betrifft außerdem einen Rechner zur automatischen Auswahl und Zusammenstellung eines Lernkurses aus Lernobjekten für einen Lernenden.

Der Rechner, auf dem ein derartiges Verfahren ausgeführt wird, ist in der Regel als ein Computer, insbesondere als ein Personal-Computer (PC) ausgebildet. Ein Verfahren der oben genannten Art wird im Rahmen von computergestütztem Lernen, dem sog. Computer-Based-Training (CBT), eingesetzt. CBT ist der Oberbegriff für interaktive Wissensvermittlung mittels eines Computers. Ein Lernkurs weist üblicherweise mehrere Lerneinheiten, bspw. in Form von Kapiteln oder Abschnitten, auf. Die einzelnen Lerneinheiten bestehen wiederum aus mehreren Lernobjekten. Lernobjekte umfassen bspw. Videos, Bilder, Texte, Hyperlinks zu anderen Lernobjekten oder interaktive Elemente (Übungen). Als Lernkurs kann bspw. ein "Englischkurs für Anfänger" bezeichnet werden. Die Lerneinheiten sind dann die einzelnen Kapitel dieses Lernkurses. Jedes Kapitel besteht aus mehreren Lernobjekten, die bspw. aus verschiedenen Grammatikmodulen, Vokabeltrainingsmodulen, Konversationsmodulen usw. bestehen.

Aus dem Stand der Technik ist ein CBT-Verfahren bekannt, das offline arbeitet und dem Lernenden die Lerneinheiten des Lernkurses von einem lokalen Speichermedium, bspw. einer CD-ROM, an einer Anzeigeeinheit des Computers zur Bearbeitung bereitstellt. Es sind aber auch CBT-Verfahren bekannt, die die Möglichkeiten moderner Rechnernetzwerke, bspw. eines firmeninternen Intranets oder des weltumspannenden Internets, zur Bereitstellung der Lerneinheiten des Lernkurses nutzen. Bei den CBT-Verfahren, die mit Rechnernetzwerken arbeiten, greift der Lernende mit seinem Computer über das Rechnernetzwerk auf einen bestimmten Rechner in dem Rechnernetzwerk, den sog. Server, zu. Auf dem Server sind die Lerneinheiten der Lernkurse, die Lernumgebung sowie Funktionen zur Verwaltung der Lernkurse abgelegt.

Bei den bekannten CBT-Verfahren entscheidet der Lernende selbst, was für einen Lernkurs er bearbeiten möchte.

Insbesondere muß er sich aus einer Reihe von zu einem bestimmten Themengebiet angebotenen Lernkursen denjenigen Lernkurs auswählen, der seines Erachtens seinen Fähigkeiten auf diesem Gebiet entspricht. Der Schwierigkeitsgrad des Lernkurses sollte nicht zu hoch sein, da der Lernende sonst überfordert ist und den Lernkurs wahrscheinlich vorzeitig abbricht. Andererseits sollte der Schwierigkeitsgrad des Lernkurses auch nicht zu niedrig sein, da der Lernende sich sonst unterfordert fühlt, sich langweilt und den Lernkurs wahrscheinlich ebenfalls vorzeitig abbricht. Sollte er einen zu einfachen Lernkurs dennoch zu Ende führen, wäre der Lerneffekt verständlicherweise sehr gering. In der Regel hat der Lernende jedoch nur eine ungenaue Vorstellung von dem tatsächlichen Inhalt einzelner Lerneinheiten und Lernkurse, so daß es ihm kaum möglich ist, einen seinen Fähigkeiten entspechenden Kurs auszuwählen.

Durch die bekannten CBT-Verfahren wird der Lernprozess immer mehr in den Verantwortungsbereich des Lernenden verlagert. Dem Lernenden wird ein Höchstmaß an Eigeninitiative, Selbstdisziplin und Lernfähigkeit abverlangt.

Eines der größte Probleme ist dabei die Auswahl eines geeigneten Lernkurses durch den Lernenden, der den individuellen Fähigkeiten des Lernenden angepaßt ist und dadurch eine besonders hohe Effizienz hat.

Bei Präsenz-Lernkursen, den sog. Classroom-Training, ist üblicherweise ein Kursleiter zugegen, der nach einer kurzen Befragung des Lernenden oder nach dem Auswerten eines Fragebogens, den der Lernende im Vorfeld des Lernkurses bearbeitet hat, die Fähigkeiten des Lernenden grob bestimmen kann. Abhängig von den Fähigkeiten des Lernenden wählt der Kursleiter dann einen seines Erachtens geeigneten Lernkurs für den Lernenden aus. Dieses Verfahren zur Auswahl und Zusammenstellung eines Lernkurses durch den Kursleiter kann jedoch nicht ohne weiteres auf das CBT-Verfahren übertragen werden. Ein wesentliches Merkmal des CBT ist nämlich, daß die Präsenz der Lernenden nicht erforderlich ist und daß der Lernkurs von den Lernenden auch über weite Entfernungen hinweg bearbeitet werden kann. Ein Kursleiter zur Überwachung des Lernkurses wird nicht mehr benötigt. Schließlich kann beim Classroom-Training lediglich ein bestimmter Lernkurs ausgewählt werden, der Aufbau der einzelnen Lernkurse aus Lerneinheiten und Lernobjekten kann nicht beeinflußt werden.

Eine Aufgabe der vorliegenden Erfindung besteht deshalb darin, ein Verfahren der eingangs genannten Art dahingehend auszugestalten und weiterzubilden, daß die Effizienz des Lernkurses erhöht wird.

Zur Lösung dieser Aufgabe schlägt die Erfindung ausgehend von dem Verfahren der eingangs genannten Art ein Verfahren vor, das durch die nachfolgenden Schritte gekennzeichnet ist:
- Auswahl von Fragen aus einer Gruppe von Fragen durch den Rechner, wobei die ausgewählten Fragen ein Lerngebiet betreffen, mit dem sich der Lernende im Rahmen des Lernkurses beschäftigen möchte,
- Erstellung eines Eingangstests durch Zusammenfügen der ausgewählten Fragen durch den Rechner,
- Bereitstellung des Eingangstests an den Lernenden durch den Rechner,
- Aufnahme der Antworten des Lernenden auf die Fragen des Eingangstests durch den Rechner,
- Bestimmung der Fähigkeiten des Lernenden durch eine Auswertung der Antworten des Lernenden durch den Rechner,
- Bestimmung einer Struktur von Verknüpfungen zu Lernobjekten in Abhängigkeit von den Fähigkeiten des Lernenden durch den Rechner, wobei die Struktur von Verknüpfungen die Auswahl und die Zusammenstellung des Lernkurses repräsentiert, und
- Bereitstellung des Lernkurses für den Lernenden durch den Rechner.

Erfindungsgemäß ist erkannt worden, daß die Effizienz von CBT-Verfahren vor allem dadurch erhöht werden kann, daß dem Lernenden ein Lernkurs bereitgestellt wird, der individuell auf seine Fähigkeiten zugeschnitten ist. Anders als beim Classroom-Training wird die Auswahl und Zusammenstellung des Lernkurses aus den Lernobjekten automatisch durch den Rechner durchgeführt. Dazu werden zunächst die Fähigkeiten des Lernenden bestimmt. Abhängig von den Fähigkeiten des Lernenden wird dann ein geeigneter Lernkurs bestimmt und dem Lernenden bereitgestellt. Die Bearbeitung dieses Lernkurses erfolgt dann wie bei den aus dem Stand der Technik bekannten CBT-Verfahen.

Bei dem erfindungsgemäßen Verfahren werden im einzelnen die nachfolgenden Schritte ausgeführt. Zunächst erstellt der Rechner automatisch aus einer Gruppe von Fragen einen Eingangstest. Dazu wählt der Rechner vorzugsweise mittels eines Zufallsgenerators mehrere Fragen der Gruppe der Fragen aus und fügt die ausgewählten Fragen zu dem Eingangstest zusammen. Die Gruppe der Fragen kann auf einer Datenbank abgelegt sein. Es versteht sich, die die ausgewählten Fragen ein Lerngebiet betreffen, mit dem sich der Lernende im Rahmen des Lernkurses beschäftigen möchte. Wenn nach einem ersten Durchlauf des erfindungsgemäßen Verfahrens ein Lernkurs aus bestimmten Lernobjekten zusammengestellt worden ist, können bei einem zweiten Durchlauf des Verfahrens Fragen ausgewählt werden, die die ausgewählten Lernobjekte des Lernkurses betreffen. Dadurch kann noch einmal überprüft werden, ob die ausgewählten Lernobjekte auch tatsächlich den Fähigkeiten des Lernenden entsprechen, oder ob vielleicht doch einzelnen Lernobjekte durch andere ersetzt werden sollten.

Der erstellte Eingangstest wird dem Lernenden zur Bearbeitung bereitgestellt. Dies kann bspw. dadurch erfolgen, daß der Eingangstest ausgedruckt und dem Lernenden in Papierform bereitgestellt wird. Es ist aber auch denkbar, dem Lernenden den Eingangstest unmittelbar auf elektronischem Wege bereitzustellen, bspw. auf einer Anzeigeeinheit des Rechners.

Danach werden die Antworten des Lernenden auf die Fragen des Eingangstests durch den Rechner aufgenommen. Dies kann bspw. dadurch erfolgen, daß die Antworten auf Papier gegeben werden und dann in den Rechner eingegeben werden. Es ist aber auch denkbar, daß der Lernende die Antworten unmittelbar auf elektronischem Wege in den Rechner eingibt, bspw. über eine Eingabeeinheit des Rechners.

Anschließend werden die Fähigkeiten des Lernenden bestimmt, indem die Antworten auf die Fragen des Eingangstests durch den Rechner ausgewertet werden. Bei der Evaluierung der Antworten können unterschiedliche Merkmale (Zeit, erreichte Punktzahl, richtig/falsch) der Antworten berücksichtigt werden.

In Abhängigkeit von den Fähigkeiten des Lernenden wird dann eine Stuktur von Verknüpfungen zu Lernobjekten durch den Rechner bestimmt. Die Struktur von Verknüpfungen repräsentiert die Auswahl und die Zusammenstellung des Lernkurses. Dabei werden Lernobjekte aus dem Lerngebiet ausgewählt, mit dem sich der Lernende im Rahmen des Lernkurses beschäftigen möchte. Des weiteren werden diejenigen Lernobjekte ausgewählt, durch die dem Lernenden auf Grundlage seiner Fähigkeiten zusätzliches Wissen vermittelt werden kann, ohne den Lernenden dabei zu überfordern.

Schließlich wird dem Lernenden der ausgewählte und zusammengestellte Lernkurs durch den Rechner bereitgestellt. Die Bearbeitung dieses Lernkurses erfolgt dann wie bei den aus dem Stand der Technik bekannten CBT-Verfahen.

Es ist denkbar, daß das erfindungsgemäße Verfahren von Zeit zu Zeit aufgerufen wird, um den Inhalt des aktuellen Lernkurses an den aktuellen Wissenstand des Lernenden anzupassen. So wäre es bspw. möglich, das Verfahren jeweils nach Abschluß einer Lerneinheit aufzurufen, um so feststellen zu können, ob der Inhalt der nächsten Lerneinheit den Lernenden überfordern oder unterfordern würde. Vor der Durchführung jeder Lerneinheit kann so bestimmt werden, ob der Lernende die für die jeweilige Lerneinheit vorausgesetzten Grundlagen beherrscht. Gegebenenfalls kann der Lernkurs dahingehend neu ausgewählt und zusammengestellt werden, daß eine zusätzliche Lerneinheit zur Vermittlung der Grundlagen vor die nächste Lerneinheit eingeschoben wird.

Mittels des erfindungsgemäßen Verfahrens ist es erstmals möglich, einen Lernkurs individuell für jeden Lernenden in Abhängigkeit von seinen Fähigkeiten durch einen Rechner aus Lernobjekten auszuwählen und zusammenzustellen. Dadurch wird sichergestellt, daß der Lernende von dem Lernkurs weder unterfordert noch überfordert ist, und die Wahrscheinlichkeit, daß der Lernende den Lernkurs auch tatsächlich zu Ende bearbeitet, kann entscheidend erhöht werden. Das führt zu einer wesentlich besseren Effizienz des Lernkurses. Außerdem weist ein mit dem erfindungsgemäßen Verfahren ausgewählter und zusammengestellter Lernkurs keine starre Kursstruktur mit Lerneinheiten auf. Vielmehr kann der Lernkurs dynamisch aus einer Vielzahl von Lernobjekten zusammengestellt werden.

Gemäß einer vorteilhaften Weiterbildung der Erfindung wird vorgeschlagen, daß die Struktur von Verknüpfungen durch die nachfolgenden Schritte bestimmt wird:
- Bestimmung von Merkmalen durch eine Auswertung der Antworten des Lernenden auf die Fragen des Eingangstests durch den Rechner, wobei die Merkmale die Fähigkeiten des Lernenden repräsentieren,
- Eingabe der Merkmale in eine Entscheidungsmatrix durch den Rechner,
- Entnahme der Struktur von Verknüpfungen zu den Lernobjekten durch den Rechner als Ausgang der Entscheidungsmatrix.

In der Entscheidungsmatrix sind Informationen darüber abgelegt, welche Lernobjekte bei welchen Fähigkeiten des Lernenden ausgewählt und zu einem Lernkurs zusammengestellt werden sollten. Die Entscheidungsmatrix kann bspw. als ein Expertensystem ausgebildet sein.

Gemäß einer bevorzugten Ausführungsform der Erfindung wird zur Bestimmung der Merkmale die Richtigkeit der Antworten auf die Fragen des Eingangstests durch den Rechner als erste Werte aufgenommen und mit vorgegebenen Anforderungswerten verglichen. Zur Bestimmung der Merkmale kann vorteilhafterweise außerdem die zu der Beantwortung der Fragen des Eingangstests benötigte Zeit durch den Rechner als zweite Werte aufgenommen und mit vorgegebenen Anforderungswerten verglichen werden.

Gemäß einer bevorzugten Ausführungsform wird die Struktur der Verknüpfungen zu den Lernobjekten in dem Rechner gespeichert. Vorteilhafterweise wird die Struktur der Verknüpfungen zu den Lernobjekten durch den Rechner in einer Datenbank gespeichert.

Damit der Lernende weiß, wie der durch den Rechner ausgewählte und zusammengestellte Lernkurs strukturiert ist und welche Lerneinheiten und Lernobjekte ihn im Verlauf des Lernkurses erwarten, wird die Struktur von Verknüpfungen zu Lernobjekten dem Lernenden durch den Rechner vorzugsweise mittels Electronic-Mail (E-Mail) übermittelt.

Der Lernkurs wird dem Lernenden gemäß einer bevorzugten Ausführungsform der Erfindung durch den Rechner auf einer Web-Seite bereitgestellt. Der Lerndende hat Zugriff auf diese Web-Seite, so daß er den Lernkurs über die Web-Seite bearbeiten kann.

Von besonderer Bedeutung ist die Realisierung des erfindungsgemäßen Verfahrens in der Form eines Steuerelements für einen Rechner. Dabei ist auf dem Steuerelement ein Programm abgespeichert, das auf dem Rechner ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, bspw. eine Compact Disc (CD) oder eine Diskette oder dergleichen.

Eine weitere Aufgabe der vorliegenden Erfindung besteht darin, einen Rechner der eingangs genannten Art dahingehend auszugestalten und weiterzubilden, daß die Effizienz des Lernkurses erhöht wird.

Zur Lösung dieser Aufgabe schlägt die Erfindung ausgehend von dem Rechner der eingangs genannten Art vor, daß der Rechner aufweist:
- Mittel zur Auswahl von Fragen aus einer Gruppe von Fragen, wobei die ausgewählten Fragen ein Lerngebiet betreffen, mit dem sich der Lernende im Rahmen des Lernkurses beschäftigen möchte,
- Mittel zur Erstellung eines Eingangstests durch Zusammenfügen der ausgewählten Fragen,
- Mittel zur Bereitstellung des Eingangstests an den Lernenden,
- Mittel zur Aufnahme der Antworten des Lernenden auf die Fragen des Eingangstests,
- Mittel zur Bestimmung der Fähigkeiten des Lernenden durch eine Auswertung der Antworten des Lernenden,
- Mittel zur Bestimmung einer Struktur von Verknüpfungen zu Lernobjekten in Abhängigkeit von den Fähigkeiten des Lernenden, wobei die Struktur den Lernkurs repräsentiert, und
- Mittel zur Bereitstellung des Lernkurses für den Lernenden.

Die Mittel zur Auswahl der Fragen aus der Gruppe von Fragen weisen vorteilhafterweise einen Zufallsgenerator auf.

Gemäß einer vorteilhaften Weiterbildung der Erfindung wird vorgeschlagen, daß die Mittel zur Bestimmung der Struktur von Verknüpfungen aufweisen:
- Mittel zur Bestimmung von Merkmalen durch eine Auswertung der Antworten des Lernenden auf die Fragen des Eingangstests, wobei die Merkmale die Fähigkeiten des Lernenden repräsentieren,
- Mittel zur Eingabe der Merkmale in eine Entscheidungsmatrix,
- Mittel zur Entnahme der Struktur von Verknüpfungen zu den Lernobjekten als Ausgang der Entscheidungsmatrix.

Gemäß einer bevorzugten Ausführungsform der Erfindung weisen die Mittel zur Bestimmung der Merkmale Mittel zur Aufnahme der Richtigkeit der Antworten auf die Fragen des Eingangstests als erste Werte und Mittel zum Vergleichen der ersten Werte mit vorgegebenen Anforderungswerten auf. Darüber hinaus weisen die Mittel zur Bestimmung der Merkmale vorteilhafterweise Mittel zur Aufnahme der zu der Beantwortung der Fragen des Eingangstests benötigten Zeit als zweite Werte und Mittel zum Vergleichen der zweiten Werte mit vorgegebenen Anforderungswerten auf.

Vorteilhafterweise weist der Rechner Mittel zum Speichern der Struktur der Verknüpfungen zu den Lernobjekten auf. Der Rechner weist vorzugsweise eine Datenbank zum Speichern der Struktur der Verknüpfungen zu den Lernobjekten auf.

Gemäß einer anderen bevorzugten Ausführungsform der Erfindung ist die Gruppe der Fragen in einer Datenbank gespeichert.

Gemäß einer vorteilhaften Weiterbildung der vorliegenden Erfindung wird vorgeschlagen, daß der Rechner in ein Rechnernetzwerk eingebunden ist. Das Rechnernetzwerk ist vorteilhafterweise als ein firmeninternes Intranet ausgebildet. Alternativ wird vorgeschlagen, daß das Rechnernetzwerk als ein weltumspannendes Rechnernetzwerk, insbesondere als das Internet, ausgebildet ist.

Im folgenden wird eine bevorzugte Ausführungsform der vorliegenden Erfindung anhand der Zeichnungen näher erläutert. Es zeigt:

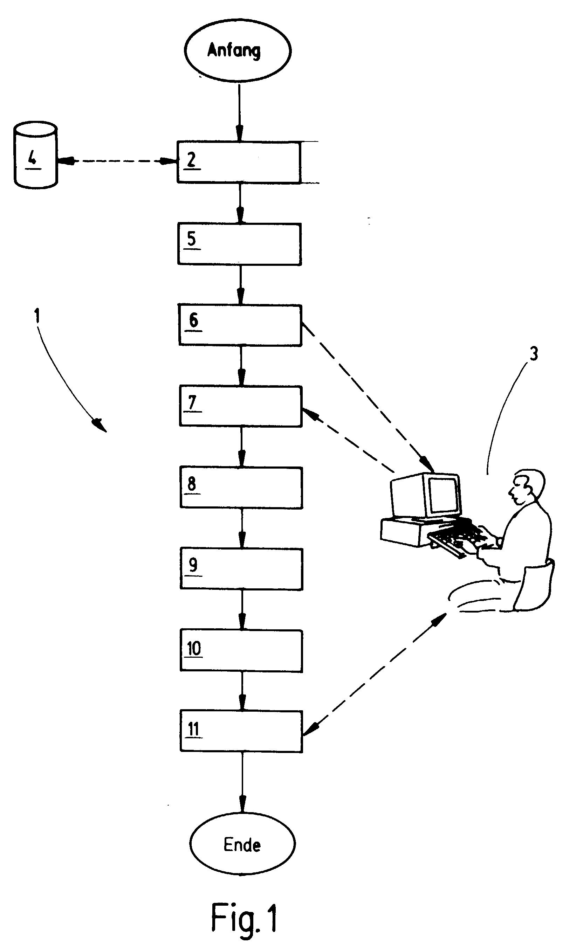

- Fig. 1: ein Ablaufdiagramm des erfindungsgemäßen Verfahrens.

In Fig. 1 ist das erfindungsgemäße Verfahren in seiner Gesamtheit mit dem Bezugszeichen 1 gekennzeichnet. Das Verfahren 1 dient zur automatischen Auswahl und Zusammenstellung eines Lernkurses aus Lernobjekten durch einen Rechner. Der Lernkurs besteht aus mehreren Lerneinheiten. Die Lerneinheiten wiederum bestehen aus mehreren Lernobjekten. Der Lernkurs wird von einem Lernenden 3 bearbeitet. Zu Beginn des Verfahrens 1 werden in einem Schritt 2 Fragen aus einer Gruppe von Fragen mittels eines Zufallsgenerators des Rechners ausgewählt. Die Gruppe der Fragen ist in einer Datenbank 4 abgelegt. Die ausgewählten Fragen betreffen ein Lerngebiet, mit dem sich der Lernende 3 im Rahmen des Lernkurses beschäftigen möchte.

In einem nachfolgenden Schritt 5 wird ein Eingangstest erstellt. Dazu werden die ausgewählten Fragen durch den Rechner zusammengefügt.

In einem weiteren Schritt 6 wird der Eingangstest dem Lernenden 3 bereitgestellt. Die Fragen des Eingangstests werden bspw. auf der Anzeigeeinheit des Rechners dargestellt. Der Lernende 3 beantwortet die Fragen des Eingangstests und in einem weiteren Schritt 7 des Verfahrens 1 werden die Antworten des Lernenden 3 durch den Rechner aufgenommen. Die gestrichelten Pfeile zwischen den Schritten 6 und 7 und dem Lernenden 3 deuten eine Kommunikation zwischen dem Rechner und dem Lernenden 3 in den gekennzeichneten Richtungen an.

In einem nachfolgenden Schritt 8 werden durch Auswertung der Antworten des Lernenden 3 auf die Fragen des Eingangstests Merkmale bestimmt. Die Merkmale repräsentieren die Fähigkeiten des Lernenden 3.

Die Merkmale werden in einem Schritt 9 in eine Entscheidungsmatrix eingegeben. Die Entscheidungsmatrix ist als ein Expertensystem ausgebildet.

Als Ausgang der Entscheidungsmatrix wird in einem Schritt 10 eine Struktur von Verknüpfungen zu Lernobjekten entnommen. Die Struktur von Verknüpfungen repäsentiert die Auswahl und die Zusammenstellung des Lernkurses. Mittels der Entscheidungsmatrix kann also ein Lernkurs zusammengestellt werden, der an die individuellen Fähigkeiten des Lernenden 3 angepaßt ist. Die Struktur von Verknüpfungen zu Lernobjekten kann dem Lernenden 3 durch den Rechner mittels Electronic-Mail (E-Mail) übermittelt werden (nicht dargestellt).

In einem nachfolgenden Schritt 11 wird der mittels des Verfahrens 1 zusammengestellte Lernkurs dann dem Lernenden 3 bereitgestellt. Der Lernkurs kann dem Lernenden 3 auf einer Web-Seite bereitgestellt werden, auf die der Lernende 3 Zugriff hat. Über die Web-Seite kann der Lernende 3 den Lernkurs dann auch bearbeiten. Der gestrichelt gezeichnete Doppelpfeil zwischen dem Schritt 11 und dem Lernenden 3 deutet die Interaktion zwischen dem Lernenden 3 und dem Rechner während der Bearbeitung des Lernkurses an. Die Bearbeitung des Lernkurses durch den Lernenden 3 erfolgt wie bei den aus dem Stand der Technik bekannten CBT-Verfahren.

## Patentansprüche

1. Verfahren (1) zur automatischen Auswahl und Zusammenstellung eines Lernkurses aus Lernobjekten für einen Lernenden (3) durch einen Rechner, **gekennzeichnet** durch die nachfolgenden Schritte:
- Auswahl von Fragen aus einer Gruppe von Fragen durch den Rechner (2), wobei die ausgewählten Fragen ein Lerngebiet betreffen, mit dem sich der Lernende (3) im Rahmen des Lernkurses beschäftigen möchte,
- Erstellung eines Eingangstests durch Zusammenfügen der ausgewählten Fragen durch den Rechner (5),
- Bereitstellung des Eingangstests an den Lernenden (3) durch den Rechner (6),
- Aufnahme der Antworten des Lernenden (3) auf die Fragen des Eingangstests durch den Rechner (7),
- Bestimmung der Fähigkeiten des Lernenden (3) durch eine Auswertung der Antworten des Lernenden (3) durch den Rechner,
- Bestimmung einer Struktur von Verknüpfungen zu Lernobjekten in Abhängigkeit von den Fähigkeiten des Lernenden (3) durch den Rechner (8, 9, 10), wobei die Struktur von Verknüpfungen die Auswahl und die Zusammenstellung des Lernkurses repräsentiert, und
- Bereitstellung des Lernkurses für den Lernenden (3) durch den Rechner (11).

2. Verfahren (1) nach Anspruch 1, dadurch gekennzeichnet, daß die Fragen mittels eines Zufallsgenerators des Rechners (2) aus der Gruppe von Fragen ausgewählt werden.

3. Verfahren (1) nach Anspruch 1 oder 2, dadurch gekennzeichnet, daß die Struktur von Verknüpfungen durch die nachfolgenden Schritte bestimmt wird:
- Bestimmung von Merkmalen durch eine Auswertung der Antworten des Lernenden (3) auf die Fragen des Eingangstests durch den Rechner (8), wobei die Merkmale die Fähigkeiten des Lernenden (3) repräsentieren,
- Eingabe der Merkmale in eine Entscheidungsmatrix durch den Rechner (9),
- Entnahme der Struktur von Verknüpfungen zu den Lernobjekten durch den Rechner als Ausgang der Entscheidungsmatrix (10).

4. Verfahren (1) nach Anspruch 3, dadurch gekennzeichnet, daß zur Bestimmung der Merkmale die Richtigkeit der Antworten auf die Fragen des Eingangstests durch den Rechner als erste Werte aufgenommen und mit vorgegebenen Anforderungswerten verglichen werden.

5. Verfahren (1) nach Anspruch 3 oder 4, dadurch gekennzeichnet, daß zur Bestimmung der Merkmale die zu der Beantwortung der Fragen des Eingangstests benötigte Zeit durch den Rechner als zweite Werte aufgenommen und mit vorgegebenen Anforderungswerten verglichen werden.

6. Verfahren (1) nach einem der Ansprüche -1 bis 5, dadurch gekennzeichnet, daß die Struktur der Verknüpfungen zu den Lernobjekten in dem Rechner gespeichert wird.

7. Verfahren (1) nach einem der Ansprüche 1 bis 6, dadurch gekennzeichnet, daß die Struktur der Verknüpfungen zu den Lernobjekten durch den Rechner in einer Datenbank gespeichert wird.

8. Verfahren (1) nach einem der Ansprüche 1 bis 7, dadurch gekennzeichnet, daß die Struktur von Verknüpfungen zu Lernobjekten dem Lernenden (3) durch den Rechner mittels Electronic-Mail (E-Mail) übermittelt wird.

9. Verfahren (1) nach einem der Ansprüche 1 bis 8, dadurch gekennzeichnet, daß der Lernkurs dem Lernenden (3) durch den Rechner auf einer Web-Seite bereitgestellt wird.

10. Steuerelement, insbesondere Compact Disc (CD), Diskette oder dergleichen, für einen Rechner, auf dem ein Programm abgespeichert ist, das auf dem Rechner ablauffähig und zur Ausführung eines Verfahrens (1) nach einem der Ansprüche 1 bis 9 geeignet ist.

11. Rechner zur automatischen Auswahl und Zusammenstellung eines Lernkurses aus Lernobjekten, **dadurch gekennzeichnet**, daß der Rechner aufweist:
- Mittel zur Auswahl von Fragen aus einer Gruppe von Fragen, wobei die ausgewählten Fragen ein Lerngebiet betreffen, mit dem sich der Lernende (3) im Rahmen des Lernkurses beschäftigen möchte,
- Mittel zur Erstellung eines Eingangstests durch Zusammenfügen der ausgewählten Fragen,
- Mittel zur Bereitstellung des Eingangstests an den Lernenden (3),
- Mittel zur Aufnahme der Antworten des Lernenden (3) auf die Fragen des Eingangstests,
- Mittel zur Bestimmung der Fähigkeiten des Lernenden (3) durch eine Auswertung der Antworten des Lernenden (3),
- Mittel zur Bestimmung einer Struktur von Verknüpfungen zu Lernobjekten in Abhängigkeit von den Fähigkeiten des Lernenden (3), wobei die Struktur von Verknüpfungen die Auswahl und die Zusammenstellung des Lernkurses repräsentiert, und
- Mittel zur Bereitstellung des Lernkurses für den Lernenden (3).

12. Rechner nach Anspruch 11, dadurch gekennzeichnet, daß die Mittel zur Auswahl der Fragen aus der Gruppe von Fragen einen Zufallsgenerator aufweisen.

13. Rechner nach Anspruch 11 oder 12, dadurch gekennzeichnet, daß die Mittel zur Bestimmung der Struktur von Verknüpfungen aufweisen:
- Mittel zur Bestimmung von Merkmalen durch eine Auswertung der Antworten des Lernenden (3) auf die Fragen des Eingangstests, wobei die Merkmale die Fähigkeiten des Lernenden (3) repräsentieren,
- Mittel zur Eingabe der Merkmale in eine Entscheidungsmatrix,
- Mittel zur Entnahme der Struktur von Verknüpfungen zu den Lernobjekten als Ausgang der Entscheidungsmatrix.

14. Rechner nach Anspruch 13, dadurch gekennzeichnet, daß die Mittel zur Bestimmung der Merkmale Mittel zur Aufnahme der Richtigkeit der Antworten auf die Fragen des Eingangstests als erste Werte und Mittel zum Vergleichen der ersten Werte mit vorgegebenen Anforderungswerten aufweisen.

15. Rechner nach Anspruch 13 oder 14, dadurch gekennzeichnet, daß die Mittel zur Bestimmung der Merkmale Mittel zur Aufnahme der zu der Beantwortung der Fragen des Eingangstests benötigten Zeit als zweite Werte und Mittel zum Vergleichen der zweiten Werte mit vorgegebenen Anforderungswerten aufweisen.

16. Rechner nach einem der Ansprüche 11 bis 15, dadurch gekennzeichnet, daß der Rechner Mittel zum Speichern der Struktur der Verknüpfungen zu den Lernobjekten aufweist.

17. Rechner nach Anspruch 16, dadurch gekennzeichnet, daß der Rechner eine Datenbank zum Speichern der Struktur der Verknüpfungen zu den Lernobjekten aufweist.

18. Rechner nach einem der Ansprüche 11 bis 17, dadurch gekennzeichnet, daß die Gruppe der Fragen in einer Datenbank gespeichert ist.

19. Rechner nach einem der Ansprüche 11 bis 18, dadurch gekennzeichnet, daß der Rechner in ein Rechnernetzwerk eingebunden ist.

20. Rechner nach Anspruch 19, dadurch gekennzeichnet, daß das Rechnernetzwerk als ein firmeninternes Intranet ausgebildet ist.

21. Rechner nach Anspruch 19, dadurch gekennzeichnet, daß das Rechnernetzwerk als ein weltumspannendes Rechnernetzwerk, insbesondere als das Internet, ausgebildet ist.
